(19) Europäisches Patentamt
European Patent Office
Office européen des brevets

(11) Numéro de publication : **0 349 485 B1**

(12) **FASCICULE DE BREVET EUROPEEN**

(45) Date de publication du fascicule du brevet :
**22.01.92 Bulletin 92/04**

(51) Int. Cl.⁵ : **E04G 25/06, F16B 37/10**

(21) Numéro de dépôt : **89810472.4**

(22) Date de dépôt : **19.06.89**

(54) **Etai.**

(30) Priorité : **28.06.88 CH 2446/88**

(43) Date de publication de la demande :
**03.01.90 Bulletin 90/01**

(45) Mention de la délivrance du brevet :
**22.01.92 Bulletin 92/04**

(84) Etats contractants désignés :
**AT BE CH DE ES FR GB GR IT LI LU NL SE**

(56) Documents cités :
**CH-A- 321 018
DE-A- 3 210 448
FR-A- 1 210 274
FR-A- 2 492 019**

(73) Titulaire : **ETABLISSEMENT NANICOBA
c/o Cura Treuinstitut Städtle 36 Case Postale
827
FL-9490 Vaduz (LI)**

(72) Inventeur : **Bersier, Nicolas
94 rue de Vevey
CH-1630 Bulle (CH)**

(74) Mandataire : **Kirker, Gaylord Emile et al
c/o KIRKER & Cie S.A. 14, Rue du Mont-Blanc
Case postale 872
CH-1211 Genève 1 (CH)**

EP 0 349 485 B1

Jouve, 18, rue Saint-Denis, 75001 PARIS

## Description

On connaît un étai comprenant une vis centrale mobile axialement dans un tube extérieur formant support, une tête montée pour tourner sur l'extrémité de ce tube se trouvant en haut lorsque l'étai est en position verticale de travail, un écrou disposé dans cette tête et formé de deux portions angulaires d'écrou montées dans la tête pour être déplaçable radialement par rapport à la vis, entre une position de coopération avec le filet de la vis et une position dégagée de ce filet. Le brevet CH-A-321.018 décrit un étai de ce type, conçu dans le but de permettre d'amener rapidement la vis en position approximative de travail, l'écrou n'étant utilisé que pour le réglage fin de la vis. Toutefois, en pratique, avec des filets de formes classiques, symétriques, il est très difficile et pratiquement impossible d'obtenir le dégagement des parties d'écrou hors du filet de la vis, et d'obtenir un bon appui en position de travail, en raison précisément de la forme symétrique de ces filets. En outre, il ne dispose d'aucun système de sécurité permettant d'éviter que le tube intérieur ne s'échappe lors de la manipulation de l'étai, ce qui peut causer de graves accidents.

La présente invention vise à fournir un étai de ce type, dans lequel la vis peut être amenée rapidement et avec un effort très modéré, dans une position proche d'une position de travail, le réglage fin se faisant par rotation de l'écrou.

L'étai comporte en outre un système de sécurité permettant d'éviter que le tube intérieur puisse sortir accidentellement du tube extérieur lors de la manipulation de l'étai. L'étai selon l'invention est conforme à la revendication 1.

Le dessin annexé représente, à titre d'exemple, une forme d'exécution de l'étai selon l'invention.

Fig. 1 en est une vue en élévation.

Fig. 2 est une vue partielle d'un détail en coupe selon 2-2 de fig. 1.

Fig. 3 est une vue en coupe selon 3-3 de fig. 1.

Fig. 4 est une vue partielle, en coupe selon 4-4 de fig. 3, montrant certaines parties en position de travail de l'étai.

Fig. 5 est une vue pareille à fig. 4 mais montrant les mêmes parties en position de non coopération de l'écrou avec la vis.

Fig. 6 est une vue partielle d'un détail.

Fig. 7 est une vue partielle, en coupe et à plus grande échelle des filets de la vis et d'une des parties de l'écrou, en position de travail de l'étai.

Fig. 8 est une vue pareille à fig. 7 mais montrant les filets dans une position intermédiaire où les parties d'écrou sont en train de s'écarter de la vis, ou en train de reprendre leur position de travail.

Fig. 9 est une vue analogue aux fig. 7 et 8 mais montrant le filet de l'une des parties d'écrou dégagé du filet de la vis.

L'étai représenté sur le dessin comprend un tube 1 formant support et muni à l'une de ses extrémités d'un pied 2 prévu pour reposer sur le sol. Une vis 3, tubulaire, est disposée axialement dans le tube 1. Cette vis est munie à son extrémité supérieure d'une plaque d'appui 4 analogue à 2. L'extrémité inférieure de cette vis est dépourvue de filetage sur une certaine longueur, ceci pour éviter que l'étai ne soit utilisé au delà de son extension maximale admissible. La vis 3 passe à travers une tête 5 prévue pour tourner sur l'extrémité supérieure du tube 1.

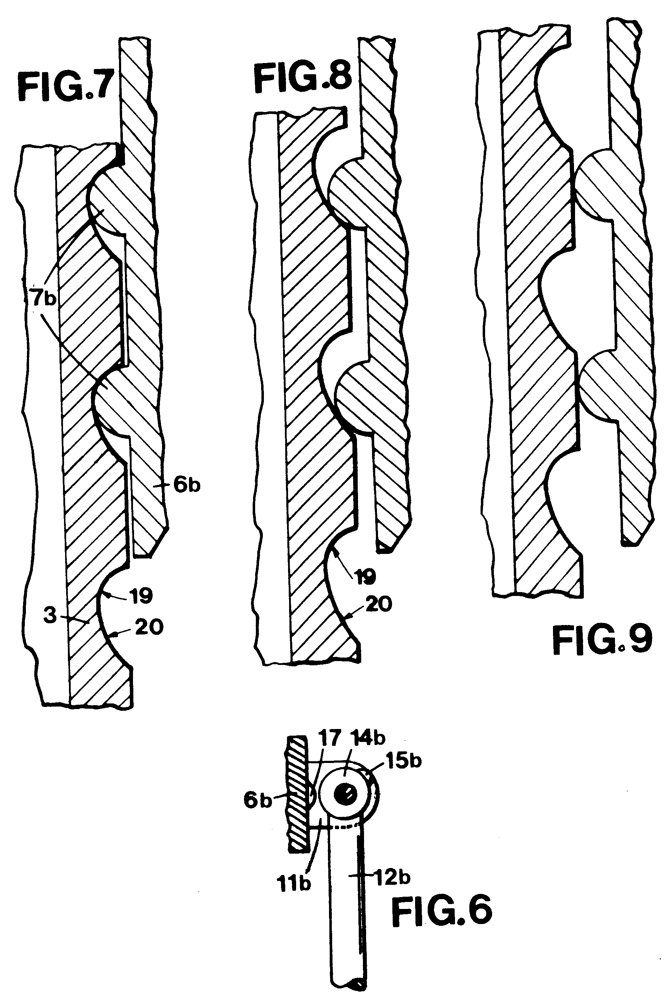

A l'intérieur de la tête tournante 5 sont disposées deux parties angulaires d'écrou 6a, 6b s'étendant chacune sur un angle inférieur ou égal à 180°. Chacune de ces parties d'écrou est de forme allongée et présente un petit nombre seulement (deux dans l'exemple représenté) de portions de filet 7a, 7b, dans le voisinage de son extrémité inférieure. Sur la fig. 7, on voit les filets 7b de la partie d'écrou 6b, en prise avec le filet de la vis 3.

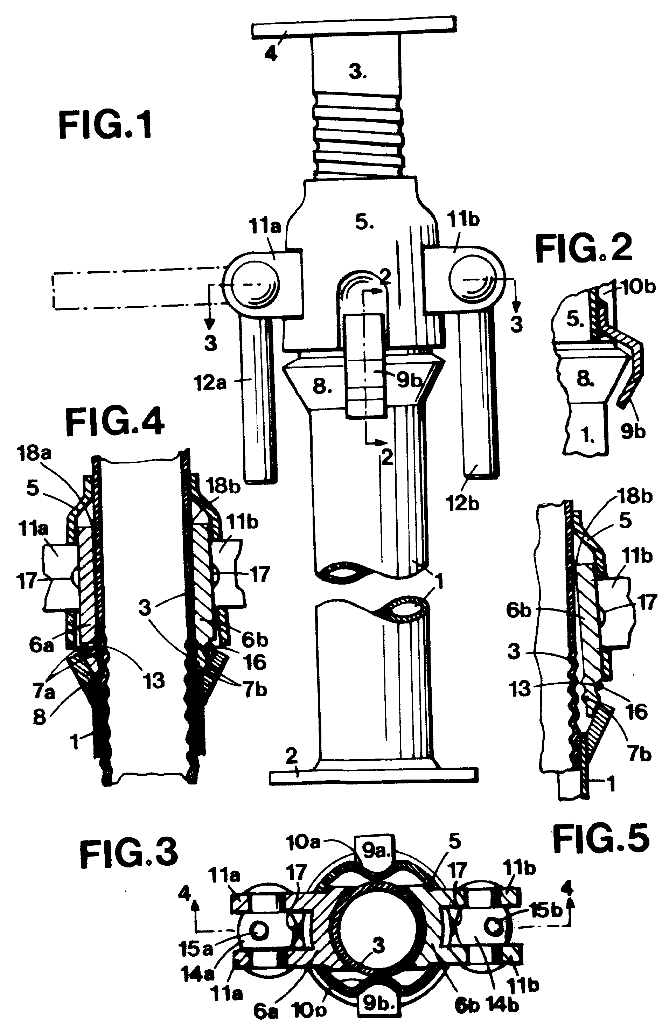

Le tube 1 présente, à sa partie supérieure, un évasement annulaire 8 qui a deux fonctions. D'une part, son intérieur conique (fig. 4) reçoit la charge de l'étai et presse l'extrémité inférieure conique des parties d'écrou 6a, 6b, contre la vis 3, assurant ainsi l'engagement des portions de filets 7a, 7b des parties d'écrous 6a, 6b dans le filet de la vis 3, lorsque les organes sont dans la position selon fig. 4.

D'autre part, deux crochets symétriques 9a, 9b (fig. 2 et 3) soudés dans les dépressions 10a, 10b symétriques de la tête 5 viennent en contact avec l'évasement 8, pour retenir la tête 5 sur le tube 1, lorsque l'on transporte l'étai en le tenant incliné le haut vers le bas.

Les dépressions 10a, 10b ont la fonction d'assurer le centrage de la tête 5 sur la vis 3 (fig. 3).

Les parties d'écrou 6a, 6b sont solidaires chacune, respectivement, d'une paire de pattes 11a, 11b traversant des trous de la tête 5. Des bras 12a, 12b, sont montés pivotants chacun sur la partie extérieure de l'une des paires de pattes 11a, 11b, respectivement (fig. 1 et 3).

Comme on le voit sur les fig. 1, 4 et 5, la tête 5 a la forme d'une cloche s'évasant vers le bas, ce qui fait que l'extrémité supérieure des parties d'écrous 6a, 6b, se trouve entre la partie supérieure de cette tête et la vis 3, avec un jeu très faible, alors que vers le bas, le jeu est un peu plus important, lui permettant seulement une oscillation limitée, comme le montre la différence entre la fig. 4 et la fig. 5.

Sur la fig. 4 on voit la tête 5 dans sa position inférieure où l'extrémité inférieure conique des parties d'écrou 6a, 6b, sont engagées à fond dans la partie intérieure conique de l'évasement 8. Cette position s'acquiert automatiquement par la gravité exercée sur les pattes 11a, 11b et sur les bras 12a, 12b. En poussant vers le haut les pattes 11a, 11b, en agissant verticalement sur les bras 12a, 12b et en raison de la forme évasée vers le bas de la tête 5, les parties d'écrou 6a, 6b ont oscillé et atteint la position selon fig. 5 où les parties de filets 7a, 7b sont dégagées du filet de la vis 3. Dès que ce dégagement se produit, rien ne retient la vis et elle tombe par gravité dans sa position inférieure où la plaque 4 s'approche sensiblement de la tête 5. Dès qu'on cesse de pousser les bras 12a, 12b vers le haut, la tête 5 et les parties d'écrou 6a, 6b reviennent dans la position selon fig. 4.

On voit sur les fig. 7 à 9 que le filet convexe des parties d'écrou 6a, 6b a un profil curviligne continu à deux flancs symétriques, dans cet exemple un demi-cercle. Par contre, le filet concave curviligne de la vis 3 a deux flancs curvilignes dissymétriques. Son flanc supérieur 19 a une forme adaptée à celle du flanc supérieur du filet des parties d'écrou 6a, 6b (quart de cercle), tandis que son flanc inférieur 20 s'étend sur une plus grande longueur axiale que son flanc supérieur 19 et présente ainsi, comme on le voit sur le dessin, une pente moyenne notablement inférieure à celle du flanc supérieur. Cette disposition a pour effet que, lorsqu'une charge agit sur l'étai, la vis 3 est retenue axialement (ou poussée vers le haut) par les parties d'écrou 6a, 6b, tandis que, lorsque l'étai est déchargé et qu'on exerce à la main sur la vis 3 une traction suffisante et de sens opposé à une charge, les filets 7a, 7b des parties d'écrou 6a, 6b, agissant alors sur le flanc inférieur 20 à faible pente du filet de la vis 3, repousse les parties d'écrou 6a, 6b vers l'extérieur (fig. 8) jusqu'à les dégager complètement (fig. 9). Ainsi, la vis peut être amenée rapidement très près de sa position finale de travail et il ne reste plus qu'à faire tourner la tête 5 (après l'avoir laissé revenir d'elle-même en position inférieure) pour amener la vis en position exacte de travail.

La forme curviligne continue du profil des filets 7a, 7b, et 19, 20, évite tout endommagement de ces filets lors de l'entrechoquement de ces filets, contrairement à ce qui serait le cas avec des filets en dents de scie, qui seraient ainsi rapidement hors d'usage.

Pour éviter tout risque que la vis s'échappe hors des parties d'écrou 6a, 6b et de la tête 5 (et par conséquent aussi du tube 1) lors d'un transport de l'étai en position inclinée tête vers le bas, il est prévu le moyen de sécurité suivant.

Une gorge 13 est pratiquée dans la partie extérieure et inférieure des parties d'écrou 6a, 6b et un ressort en fil circulaire fendu 16 du genre circlip est disposé dans cette gorge, pour solliciter constamment ces parties d'écrou à rester constamment en prise avec le filet de la vis 3. Ce n'est que lorsqu'on le veut que les parties d'écrou 6a, 6b sont déconnectées de la vis 3 et pour cela il faut agir sur les pattes 11a, 11b, comme déjà vu, en soulevant la tête 5 par poussée vers le haut exercée sur les bras 12a, 12b. On peut obtenir le même résultat avec moins d'effort, simplement en faisant osciller les bras 12a, 12b, de plus de 90° vers le haut, grâce aux moyens suivants.

Il est prévu sur la tête 14a, 14b des bras 12a, 12b, une partie 15a, 15b, formant came, qui vient en contact avec un renflement 17 prévu sur l'extérieur des parties d'écrou 6a, 6b dans leur partie située entre les pattes 11a et 11b (fig. 6). La rencontre de ces deux cames 15a, 15b avec les renflements 17 des parties d'écrous 6a, 6b rend solidaire les bras 12a, 12b des parties d'écrou 6a, 6b, ce qui permet, en continuant de pousser vers le haut les bras 12a, 12b, d'imprimer à la partie inférieure des parties d'écrou 6a, 6b, un mouvement basculant sensiblement horizontal qui les amène en position dégagée selon fig. 5, les points d'appui se situant en 18a, 18b.

Dans une variante, chacun des renflements 17 des fig. 4, 5, 6 sur lequel vient agir une des surfaces de came 15a, 15b, pourrait se trouver non pas sur une des parties d'écrous 6a, 6b, mais sur une partie de la tête 5 qui s'étendrait entre une paire de fentes de cette tête laissant passer les pattes 11a, 11b.

L'étai décrit présente les avantages suivants.

Les grands déplacements de la vis 3, dans les deux sens, peuvent être réalisés rapidement, sans qu'il soit nécessaire de tourner l'écrou.

Le réglage fin se fait par une rotation très brève de la tête 5, en principe, au maximum un tour et quelques degrés.

Une sécurité (8, 9) empêche automatiquement la tête 5 de quitter accidentellement le tube support 1, lors d'un transport de l'étai tête en bas.

Une autre sécurité (16) empêche automatiquement la vis de quitter accidentellement la tête 5, lors d'un transport de l'étai tête en bas.

## Revendications

1. Etai, du type comprenant une vis centrale (3) mobile axialement dans un tube extérieur (1) formant support et traversant une tête (5) montée pour tourner sur l'extrémité de ce tube (1) se trouvant en haut en position verticale de travail de l'étai, un écrou disposé dans cette tête, solidaire angulairement de celle-ci et formé de deux portions angulaires d'écrou (6a, 6b) montées dans la tête (5) pour être déplaçables radialement par rapport à la vis (3), entre une position de coopération avec le filet de la vis (3) et une position dégagée de ce filet, des moyens (12a, 12b ; 15a, 15b ; 17) étant prévus pour amener à volonté lesdites parties d'écrou (6a, 6b) en position dégagée de la vis (3), afin d'autoriser le retour par gravité de la vis en position inférieure, ces moyens étant montés pivotants sur lesdites parties d'écrou (6a, 6b), caractérisé en ce que, vu en coupe axiale et en position verticale de travail de l'étai, le filet de la vis centrale (3) présente une forme concave curviligne continue dont le flanc supérieur (19) est de forme adaptée à celle, convexe curviligne, du flanc supérieur du filet (7a, 7b) de chaque partie susdite d'écrou (6a, 6b), pour assurer la montée de cette vis (3) lorsqu'on fait tourner la tête (5) avec les parties d'écrou (6a, 6b) dans le sens correspondant à cette montée, tandis que le flanc inférieur (20) dudit filet de la vis centrale (3) est dissymétrique et s'étend sur une plus grande longueur axiale que le flanc supérieur (19) et présente ainsi une pente moyenne notablement inférieure à celle du flanc supérieur (19), pour que, lorsqu'une charge agit sur l'étai, la vis (3) soit retenue axialement par les parties d'écrou (6a, 6b), tandis que, lorsque l'étai est déchargé et qu'une traction suffisante et de sens opposé à une charge, est exercée à la main sur la vis (3), celle-ci, par l'action du flanc inférieur (20) à faible pente de son filet, oblige les parties d'écrou (6a, 6b) à s'écarter de la vis centrale (3) pour autoriser cette vis à se déplacer axialement dans les parties d'écrou (6a, 6b), sans que celles-ci tournent, et en ce qu'il comporte un dispositif de sécurité automatique (16) s'opposant à un déplacement longitudinal de la vis (3) hors des parties d'écrou (6a, 6b) et du tube extérieur (1), lorsque l'étai est transporté en position inclinée vers le bas, ce dispositif comprenant un organe (16) retenant les parties susdites d'écrou (6a, 6b) en prise avec le filet de la vis (3) pendant le transport de l'étai.

2. Etai selon la revendication 1, caractérisé en ce que ledit dispositif de sécurité est automatique, l'organe retenant les parties susdites d'écrou (6a, 6b) en prise avec le filet de la vis (3) étant un ressort circulaire fendu (16) disposé autour de l'ensemble de ces parties d'écrou (6a, 6b) et les sollicitant élastiquement vers leur position où ils sont en prise avec la vis (3).

3. Etai selon la revendication 1 ou 2, caractérisé en ce qu'il comporte un moyen de sécurité automatique supplémentaire s'opposant à la séparation de la tête (5), avec la vis (3), du tube extérieur (1), lorsque l'étai est transporté en position inclinée vers le bas, ces moyens comprenant au moins un crochet de retenue (9a, 9b) fixé à demeure sur la tête (5) et disposé pour venir en prise avec une saillie extérieure circulaire (8) de l'extrémité supérieure du tube (1) dès que la tête (5) s'est déplacée d'une distance fixée d'avance par rapport au tube (1).

4. Etai selon l'une des revendications précédentes, dans lequel la tête (5) susdite comporte deux bras articulés (12, 12b) servant, d'une part, à faire tourner la tête (5) sur le tube (1) pour le réglage fin de la vis (3) dans une position de travail ou pour le déchargement de l'étai en tournant dans le sens opposé et, d'autre part, pour dégager les parties d'écrou susdites (6a, 6b) de la vis (3), caractérisé en ce que lesdits bras (12a, 12b) assurent le dégagement desdites parties d'écrou (6a, 6b) du filet de la vis (3), en exerçant une force radiale d'écartement supérieure à celle provoquée par le dispositif de sécurité (16) sur ces parties d'écrou (6a, 6b) lorsqu'on soulève la tête (5) en agissant sur lesdits bras (12a, 12b).

5. Etai selon la revendication 4, caractérisé en ce que chaque bras pivotant (12a, 12b) présente, à son extrémité pivotante (14a, 14b), une partie formant came (15a, 15b) coopérant avec une partie (17) de la paroi extérieure des parties d'écrou (6a, 6b), lorsque les bras atteignent une position de travail autre que celle de repos et celle commandant la rotation de la tête (5), pour produire alors, par solidarisation des bras (12a, 12b) avec les parties d'écrou (6a, 6b), l'éloignement desdites parties d'écrou (6a, 6b) de la vis (3).

## Patentansprüche

1. Stempel, bestehend aus einer Zentralschraube (3), die in einem Aussenrohr (1) axial beweglich ist, das eine Abstützung bildet, und wobei die Zentralschraube durch einen Kopf (5) tritt, der so montiert ist, dass er sich am Ende dieses Rohres (1) drehen kann und er sich in der vertikalen Gebrauchslage des Stempels oben befindet, aus einer fest mit diesem Kopf und winkelig darin angeordneten Mutter, die aus zwei winkeligen Mutternteilen (6a, 6b) besteht, die im Kopf (5) angeordnet sind zur radialen Verschiebbarkeit in bezug auf die Schraube (3) zwischen einer Zusammenarbeitsstellung zwischen dem Gewinde der Schraube (3) und einer Aussereingriffsstellung dieses Gewindes, aus Mitteln (12a, 12b ; 15a, 15b ; 17), deren Zweck darin besteht, die erwähnten Mutternteile (6a, 6b) auf Wunsch in die Aussereingriffsstellung der Schraube (3) zu bringen zur Ermöglichung der Rückkehr der Schraube durch Schwerkraftwirkung in die untere Stellung, wobei diese Mittel um die erwähnten Mutternteile (6a, 6b) schwenkbar sind, dadurch gekennzeichnet, dass im Axialschnitt und in der vertikalen Gebrauchslage des Stempels gesehen, das Gewinde der Zentralschraube (3) eine stetig konkave, gekrümmte Form aufweist, deren obere Flanke (19) eine an die konvex gekrümmte obere Flanke des Gewindes (7a, 7b) eines jeden erwähnten Mutternteiles (6a, 6b) angepasste Form aufweist, um das Heben dieser Schraube (3) sicherzustellen, wenn der Kopf (5) mit den Mutternteilen (6a, 6b) in der diesem Heben entsprechenden Richtung gedreht wird, während die untere Flanke (20) dieser Zentralschraube (3) unsymmetrisch und axial länger als die obere Flanke (19) ist und somit eine mittlere Steigung hat, die erheblich kleiner als die der oberen Flanke (19) ist, damit, wenn eine Belastung auf den Stempel wirkt, die Schraube (3) axial von den Mutternteilen (6a, 6b) zurückgehalten wird, wogegen, wenn der Stempel entlastet wird und von Hand eine ausreichende Zugkraft in einer der Belastung entgegengesetzten Richtung auf die Schraube (3) einwirkt, diese, durch Wirkung der unteren Flanke (20) mit ihrer geringen Gewindesteigung, die Gewindeteile (6a, 6b) dazu zwingt, sich von der Zentralschraube (3) zu entfernen, um dieser Schraube zu ermöglichen sich axial in die Mutternteile (6a, 6b) zu verschieben, ohne dass diese drehen, und dadurch, dass sie eine automatische Sicherheitsvorrichtung (16) enthält, die einer Längsverschiebung der Schraube (3) ausserhalb der Mutternteile (6a, 6b) und des Aussenrohres (1) entgegenwirkt, wenn der Stempel in nach unten geneigter Lage transportiert wird, und wobei diese Vorrichtung ein die erwähnten Mutternteile (6a, 6b) im Eingriff mit dem Gewinde der Schraube (3) während des Transportes des Stempels haltendes Organ (16) enthält.

2. Stempel nach Patentanspruch 1, dadurch gekennzeichnet, dass diese Sicherheitsvorrichtung eine automatische Vorrichtung ist, dass das die erwähnten Mutternteile (6a, 6b) in Eingriff mit der Schraube (3) haltende Organ (16) eine geschlitzte Rundfeder (16) ist, die um alle Mutternteile (6a, 6b) angeordnet ist, die sie elastisch in eine solche Lage spannt, in der sie sich im Eingriff mit der Schraube (3) befinden.

3. Stempel nach Patentanspruch 1 oder 2, dadurch gekennzeichnet, dass er ein zusätzliches, automatisches Sicherheitsmittel enthält, das einer Trennung des Kopfes (5) mit der Schraube (3) vom Aussenrohr (1) entgegenwirkt, wenn der Stempel in nach unten geneigter Lage transportiert wird, und wobei diese Mittel aus mindestens einem Rückhaltehaken (9a, 9b) bestehen, der fest am Kopf (5) befestigt und so angeordnet ist, dass er mit einem äusseren Rundvorsprung (8) des oberen Endes des Rohres (1) in Eingriff kommt, sobald der Kopf (5) sich um eine zum voraus festgelegten Strecke in bezug auf das Rohr (1) verschoben hat.

4. Stempel nach einem der vorhergehenden Patentansprüche, in dem der erwähnte Kopf (5) zwei angelenkte Arme (12, 12b) enthält, die einerseits dazu dienen, dass der Kopf (5) auf dem Rohr (1) zur Feineinstellung der Schraube (3) in eine Gebrauchslage drehen kann, oder dazu, dass der Stempel dadurch entlastet werden kann, dass er in entgegengesetzter Richtung gedreht wird, und andererseits dazu, um die erwähnten Mutternteile (6a, 6b) der Schraube (3) ausser Eingriff zu bringen, dadurch gekennzeichnet, dass die Arme (12a, 12b) dadurch, dass sie eine radiale Entfernungskraft ausüben, die grösser als die von der Sicherheitsvorrichtung (16) auf die Mutternteile (6a, 6b) ausgeübte Kraft ist, wenn der Kopf (5) durch Einwirken auf die erwähnten Arme (12a, 12b) angehoben wird, sicherstellen, dass die erwähnten Mutternteile (6a, 6b) ausser Eingriff vom Gewinde der Schraube (3) kommen.

5. Stempel nach Patentanspruch 4, dadurch gekennzeichnet, dass jeder Schwenkarm (12a, 12b) an seinem Schwenkende (14a, 14b) einen Teil aufweist, der eine Nocke (15a, 15b) bildet, die mit einem Teil (17) der Aussenwand der Mutternteile (6a, 6b) zusammenwirkt, wenn die Arme eine von der Ruhelage unterschiedliche Gebrauchslage und jene, die Rotation des Kopfes (5) steuernde Lage, einnehmen, um nun, dadurch, dass es zu einer festen Verbindung der Arme (12a, 12b) mit den Mutternteilen (6a, 6b) kommt, ein Distanzieren der Mutternteile (6a, 6b) von der Schraube (3) bewirken.

## Claims

1. A prop of the type comprising a central screw (3) which can move axially in an outer tube (1), forming a support, and passes through a head (5) mounted so as to rotate on that end of this tube (1) which is at the top in the vertical working position of the prop, and a nut, arranged in this head, which is angularly integral with the latter and formed of two angular nut parts (6a, 6b) mounted in the head (5) so as to be capable of radial displacement relative to the screw (3), between a position of cooperation with the thread of the screw (3) and a position of disengagement from this thread, means (12a, 12b ; 15a, 15b ; 17) being provided for bringing said nut parts (6a, 6b), as desired, into the position of disengagement from the screw (3) in order to allow the screw to return by gravity to the lower position, these means being mounted so as to pivot on said nut parts (6a, 6b), characterized in that, viewed in axial section and in the vertical working position of the prop, the thread of the central screw (3) has a continuous curvilinear concave shape, the upper flank (19) of which has a shape matching the curvilinear convex shape of the upper flank of the thread (7a, 7b) of each of the above-mentioned nut parts (6a, 6b) in order to ensure that this screw (3) rises when the head (5) is rotated, with the nut parts (6a, 6b), in the direction corresponding to this rise, while the lower flank (20) of said thread of the central screw (3) is asymmetrical and extends over a greater axial length than the upper flank (19), thus having an average slope which is appreciably less than that of the upper flank (19), so that, when a load is acting on the prop, the screw (3) is axially retained by the nut parts (6a, 6b), whereas, when no load is acting on the prop and a sufficient traction is exerted on the screw (3) by hand in the direction opposing a load, said screw (3), through the action of the lower flank (20), of small slope, of its thread, forces the nut parts (6a, 6b) to move away from the central screw (3) in order to allow this screw to move axially in the nut parts (6a, 6b) without the latter rotating, and in that it has an automatic safety device (16) preventing a longitudinal displacement of the screw (3) out of the nut parts (6a, 6b) and the outer tube (1) when the prop is transported in a downward-pointing position, this device comprising a member (16) which keeps the above-mentioned nut parts (6a, 6b) engaged with the thread of the screw (3) during transportation of the prop.

2. A prop according to Claim 1, characterized in that said safety device is automatic, the member which keeps the above-mentioned nut parts (6a, 6b) engaged with the thread of the screw (3) being a split circular spring (16) arranged around the assembly of these nut parts (6a, 6b) and stressing them elastically towards the position in which they are engaged with the screw (3).

3. A prop according to Claim 1 or Claim 2, characterized in that it has an additional automatic safety means preventing the separation of the head (5), with the screw (3), from the outer tube (1) when the prop is transported in a downward-pointing position, these means comprising at least one retaining hook (9a, 9b) fixed permanently to the head (5) and arranged so as to engage with a circular external projection (8) on the upper end of the tube (1) as soon as the head (5) has moved a preset distance relative to the tube (1).

4. A prop according to any one of the preceding claims in which the above-mentioned head (5) has two articulated arms (12a, 12b), the function of which is on the one hand to rotate the head (5) on the tube (1) for fine adjustment of the screw (3) into a working position or for removal of a load from the prop by rotation in the opposite direction, and on the other hand to disengage the above-mentioned nut parts (6a, 6b) from the screw (3), characterized in that said arms (12a, 12b) ensure the disengagement of said nut parts (6a, 6b) from the thread of the screw (3) by exerting a radial separating force which is greater than that created by the safety device (16) on these nut parts (6a, 6b) when the head (5) is raised by acting on said arms (12a, 12b).

5. A prop according to Claim 4, characterized in that, at its pivoting end (14a, 14b), each pivoting arm (12a, 12b) has a cam-forming part (15a, 15b) which cooperates with a part (17) on the outer wall of the nut parts (6a, 6b) when the arms reach a working position other than the rest position and the position controlling the rotation of the head (5), thereby effecting the separation of the nut parts (6a, 6b) from the screw (3) by interlocking of the arms (12a, 12b) with said nut parts (6a, 6b).

FIG.1

FIG.2

FIG.4

FIG.3

FIG.5

FIG.7

7b

6b

19

3

20

FIG.8

19

20

FIG.9

17 14b

15b

6b

11b

12b

FIG.6